# EUROPEAN PATENT SPECIFICATION

(11) **EP 4 536 949 B1**
(45) Date of publication and mention of the grant of the patent: **03.06.2026**
(21) Application number: 23728296.7
(22) Date of filing: 17.05.2023
(51) Int. Cl.: F02M 21/02, F02M 53/04, F02M 61/14, F02M 61/16

(54) **FUEL INJECTOR FOR DIRECT INJECTION OF GASEOUS FUEL**
KRAFTSTOFFEINSPRITZVORRICHTUNG ZUR DIREKTEINSPRITZUNG VON GASFÖRMIGEM KRAFTSTOFF
INJECTEUR DE CARBURANT POUR INJECTION DIRECTE DE CARBURANT GAZEUX

(30) Priority: 09.06.2022 GB 202208425
(43) Date of publication of application: 16.04.2025
(73) Proprietor: Phinia Delphi Luxembourg Sarl, 4367 Belvaux (LU)
(72) Inventor: KOLKMAN, Manfred, 6780 MESSANCY (BE)
(74) Representative: Office Freylinger
(86) International application number: PCT/EP2023/063333
(87) International publication number: WO 2023/237311

(56) References cited:
- EP-A1- 2 636 880
- EP-A2- 1 455 083
- CH-A- 283 877
- DE-A1- 102011 077 959
- DE-A1- 102015 225 175

## Description

### TECHNICAL FIELD

The present invention relates to a fuel injector for direct injection of gaseous fuel. It further relates to an engine assembly.

### BACKGROUND OF INVENTION

For automotive applications, hydrogen engines are considered as a promising alternative to gasoline or diesel engines since the emissions from a hydrogen engine consist mainly of water. However, using hydrogen as a fuel in a combustion engine brings about several difficulties, some of which stem from the combustion characteristics of hydrogen. Compared to other fuel types, hydrogen has a high laminar flame velocity, a low quenching distance, a large flammability range and a high flame temperature. These characteristics increase the heat input to a fuel injector that is installed to a cylinder head of the engine.

For instance, an outward opening fuel injector may be used, i.e., a fuel injector with a pintle that opens towards the combustion chamber of the cylinder. To enhance the combustion quality of the engine, it is beneficial to direct the gas flow into the combustion chamber in a controlled manner. For this purpose, the fuel injector can be equipped at its end with a deflector cap that faces the combustion chamber. Due to its position, this deflector cap is directly exposed to the heat inside the combustion chamber, which increases the heat flow into the injector. While most parts of the fuel injector may be made of a material like stainless steel, which is resistant to high temperatures, this is not the case for every component. For instance, it is known to employ a sealing ring on the fuel injector, which is interposed between the injector body and the cylinder head and provides a gas-tight seal between the combustion chamber and the surroundings of the engine. This sealing ring is generally made out of PTFE polymer that is filled with carbon to enhance the thermal conductivity. The recommended maximum operating temperature of such a ring is 260°C. Above this limit, it may start to lose its sealing function. An example of a gaseous fuel injector is shown in DE-102015225175 A1.

### TECHNICAL PROBLEM

It is thus an object of the present invention to provide means for protecting a sealing ring of a fuel injector from overheating.

This problem is solved by a fuel injector according to claim 1 and by an engine assembly according to claim 14.

### GENERAL DESCRIPTION OF THE INVENTION

The invention provides a fuel injector for direct injection of gaseous fuel. In other words, the fuel injector is designed for an engine that is adapted for gaseous fuel. "Gaseous fuel" normally refers to a fuel that is gaseous under standard conditions, i.e., 15°C and 101,325 Pa. Specifically, the gaseous fuel may be hydrogen (H₂). The fuel injector is adapted for direct injection of the gaseous fuel into a combustion chamber of a cylinder of the respective engine. However, this does not exclude the possibility that the fuel injector could be used for indirect injection.

The fuel injector extends along an axial direction from a proximal side to a distal side. The axial direction can correspond to an injector axis, which may be a symmetry axis of at least some parts of the fuel injector. When the fuel injector is installed to the engine, the proximal side is the side that faces away from the engine, while the distal side faces the engine. The general flow direction of the fuel is from the proximal side to the distal side.

The fuel injector comprises an injector body defining a fuel passage and having a distally disposed end portion that is made of a first metal and defines a valve seat extending around an outlet opening, at least the end portion being adapted to be inserted into an axial through-opening of a cylinder head. The fuel passage extends through the injector body and communicates with the outlet opening, which is disposed on the distal side of the injector body. The end portion of the injector body at the distal side defines a valve seat that extends around the outlet opening. The end portion is made of a first metal, which is normally stainless steel. The other portions of the injector body, or the entire injector body, may be made of this first metal. The term "first metal" explicitly includes alloys, which may also comprise at least one semi-metal, semi-conductor and/or non-metal. Normally, the valve seat and the outlet opening are symmetric with respect to the abovementioned symmetry axis of the fuel injector. Also, the fuel passage can be symmetric with respect to this axis. At least the end portion of the injector body is adapted to be inserted into a through-opening of a cylinder head. The outlet opening of the fuel injector is disposed near the inside of the cylinder head, i.e., near the combustion chamber. The through-opening axially traverses a wall of the cylinder head. The end portion is adapted to the dimensions of the through-opening so that it can be inserted from the outside of the cylinder head. Strictly speaking, the through-opening is aligned axially in a state in which the fuel injector is installed on the engine with at least the end portion being inserted into the through-opening.

The fuel injector further comprises an outward opening pintle received in the injector body to be axially movable between a proximal closed position, in which it engages the valve seat to close the outlet opening, and a distal open position, in which it releases the outlet opening. The pintle is normally received in the injector body so that it can slide along the axial direction. It can be biased towards the closed position by a spring element, while it can be moved towards the open position by an electromagnetic actuator. There are various working principles known in the art for moving the pintle of a fuel injector, all of which are possible in the context of the invention. The term "outward opening" refers to a pintle that moves outward with regard to the fuel passage as it opens, i.e., towards the cylinder. In the closed position, the pintle engages the abovementioned valve seat (in a gas-tight manner) to prevent fuel from exiting the fuel passage. In the open position, it disengages from the valve seat, thereby opening the fuel passage via the outlet opening. As a rule, the pintle is also made of stainless steel.

The fuel injector also comprises a sealing ring surrounding the end portion in a first axial region and being adapted to sealingly engage an inner surface of the through-opening. The sealing ring is circumferentially disposed around the end portion. The function of the sealing ring is to prevent any gas exchange between the inside of the engine (cylinder) and the outside via the through-opening. Thus, it should provide a gas-tight seal between the end portion and the inner surface of the through-opening. The sealing ring has an annular shape and surrounds the end portion in the tangential direction. It is normally made of a polymer material. In particular, it may be made of PTFE filled with carbon, the latter being intended for enhancing the thermal conductivity of the sealing ring. When the end portion is inserted into the through-opening, the sealing ring engages the inner surface of the through-opening, as well as the end portion, thereby providing a seal between the injector body and the cylinder head. With respect to the axial direction, the sealing ring is disposed in a first axial region. One could also call the first axial region a first interval along the axial direction.

Further, the fuel injector comprises a deflector cap that is connected to the end portion and extends distally beyond the end portion and that defines at least one exit hole communicating with the outlet opening. The term "deflector cap" is not to be construed in any limiting way as to the shape of the deflector cap. Normally, at least that portion of the deflector cap that is connected to the end portion has an annular shape. The deflector cap extends further to the distal side than the end portion, one could also say that it protrudes distally with respect to the end portion. Accordingly, it is closer to the cylinder than the end portion or possibly even disposed inside the cylinder. It comprises at least one exit hole that communicates with the outlet opening. Accordingly, gaseous fuel that exits the outlet opening can exit the fuel injector through the exit hole. Due to its position, the deflector cap is normally the part of the fuel injector that is exposed to the highest temperatures. As a rule, it is also made of stainless steel. When the fuel injector is installed to the engine, the deflector cap can be in contact with the inner surface of the through-opening, thereby facilitating heat transfer from the deflector cap to the cylinder head. Such heat transfer may protect the end portion and possibly other components of the fuel injector from excessive temperatures. The deflector cap may be received over a recessed portion of the end portion. The recessed portion is radially recessed, i.e., it recedes radially with respect to an adjacent protruding portion. Accordingly, the deflector cap is partially disposed on the outside of the end portion with respect to the radial direction. A radially outer surface of the deflector cap may be provided with the same cross-section profile as the adjacent protruding portion.

Furthermore, the fuel injector comprises a heat-dissipation ring disposed in a second axial region distally offset to the first axial region and tangentially surrounding the end portion at least for the most part, the heat-dissipation ring being adapted for being in thermal contact with the end portion and the inner surface when the end portion is inserted into the through-opening. The function of the heat-dissipation ring is to provide a heat flow from the end portion to the cylinder head that bypasses the sealing ring. Normally, the sealing ring is sensitive to elevated temperatures. E.g., a sealing ring made of **PTFE** normally can only withstand temperatures up to 260°C. Since the heat-dissipation ring is disposed in a second axial region that is distally offset from the first axial region, any heat flow from the deflector cap at the distal side reaches the heat-dissipation ring before it reaches the sealing ring. Since the heat-dissipation ring is in thermal contact with the end portion and with the inner surface, at least a significant part of the heat flow can be diverted to the cylinder head before it reaches the sealing ring. The second axial region is distally offset to the first axial region, which includes the possibility that these regions overlap with respect to the axial direction. However, even in this case, a portion of the sealing ring is disposed proximally to the entire heat-dissipation ring and a portion of the heat-dissipation ring is disposed distally to the entire sealing ring. The heat-dissipation ring tangentially surrounds the end portion either completely (i.e., by 360°) or for the most part (normally by more than 300° or more than 330°). In the latter case, it is no ring in a strict sense, but the term "ring" is used here in the following for sake of simplicity. Apart from its heat-dissipation function, the heat-dissipation ring may also provide a seal between the end portion and the inner surface, thereby complementing the function of the sealing ring. However, at least in some embodiments the sealing function of the heat-dissipation ring is incomplete and/or inferior to that of the sealing ring.

The heat-dissipation ring is made of a second metal having a thermal conductivity that is at least 50% higher than a thermal conductivity of the first metal. This normally rules out that the heat-dissipation ring can be made of stainless steel or any iron-based alloy. Preferably, the thermal conductivity of the second metal is at least two times, at least three times or at least four times higher than the thermal conductivity of the first metal. It is understood that the increased thermal conductivity greatly supports the function of the heat-dissipation ring. Accordingly, the heat flow through the heat-dissipation ring towards the cylinder head is significantly increased. The term "second metal" explicitly includes alloys, which may also comprise at least one semi-metal, semi-conductor and/or non-metal.

Preferably, the second metal comprises copper. I.e., it can either be copper or a copper alloy. Such copper-containing metal has a high thermal conductivity while at the same time being reasonably cheap as compared to metals like silver or gold. Preferably, the second metal comprising copper has a thermal conductivity of at least 100 W/mK. At the same time, copper and at least some of its alloys are relatively soft in annealed state, wherefore the heat-dissipation ring is unlikely to damage the inner surface of the through-opening. Soft copper (annealed) or soft copper alloy are considered particularly convenient. The cylinder head is normally made of cast aluminum alloy (e.g. AlSi8Cu3 or AlSi6Cu4) or cast iron. In general, the second metal, as embodied in the heat-dissipation ring, preferably has a hardness lower than that of the cylinder head to avoid damages. This is typically the case with soft copper/copper alloy.

Preferably, the heat-dissipation ring is designed to be press-fitted into the through-opening under deformation so that it presses against the inner surface. On the one hand, the heat-dissipation ring is sized so that it contacts the inner surface, but on the other hand it also allows for a certain degree of elastic and/or plastic deformation so that can be fitted into the through-opening. In this embodiment, it is useful if the second metal has a considerably lower hardness than the material of the cylinder head. For instance, the cylinder head can be made of steel and the second material may comprise copper, as described above.

Preferably, the sealing ring and the heat-dissipation ring are disposed on at least one recessed portion of the end portion, with the heat-dissipation ring being at least partially disposed distal to the sealing ring. The at least one recessed portion recedes radially inwards with respect to at least one neighboring protruding portion. These two portions can define a step between them. As the respective ring is disposed in the recessed portion, it is prevented from moving axially to the adjacent protruding portion by form locking. Protruding portions may be present on either side of the recessed portion, in which case the recessed portion defines a groove may also be referred to as a "groove portion". Irrespective of the configuration of the at least one recessed portion and the rings, the heat-dissipation ring is at least partially disposed on a distal side of the sealing ring. This includes the possibility that there can be some overlap between the two rings. However, the heat flow from the deflector cap at the distal side of the fuel injector reaches the heat-dissipation ring before it reaches the sealing ring. Accordingly, at least a significant part of the heat flow can be diverted through the heat-dissipation ring into the cylinder head.

One embodiment provides that the sealing ring and the heat-dissipation ring are disposed in the same recessed portion. They may be in contact with each other, but it is also conceivable that they are axially spaced from each other. In the latter case, the recessed portion could have a structure that provides a positive locking in the axial direction, thereby preventing the sealing ring and the heat-dissipation ring from axial movement. Since the recessed portion of this embodiment normally defines a groove, each of the rings has to be expanded during assembly to be moved to the recessed portion. For the sealing ring, this is normally no problem, as it is usually made of a material that is easily deformable and thus can easily be expanded and compressed. The heat-dissipation ring, on the other hand, normally needs a special configuration to facilitate radial expansion and/or compression. Some options for this will be discussed below.

Alternatively, the sealing ring can be disposed on a first recessed portion and the heat-dissipation ring is disposed on a second recessed portion axially spaced from the first recessed portion by a ridge portion which radially protrudes with respect to the recessed portions. The second recessed portion can also define a groove, in which case there are radially protruding portions on each side of the second recessed portion. However, it is also possible that the second recessed portion extends to the distal end of the end portion. This greatly facilitates assembly of the heat-dissipation ring onto the end portion, since it can be moved into position from the distal side of the end portion without the need for any significant radial expansion. Also, the deflector cap can be received around the second recessed portion. The presence of the ridge portion that separates the first and second recessed portions can also help to protect the sealing ring from elevated temperatures, since there is no direct thermal contact between the heat-dissipation ring and the sealing ring. Ideally, at least a major part of the heat is dissipated through the heat-dissipation ring into the cylinder head before it even reaches the sealing ring. Optionally, heat may also flow from the ridge portion to the heat-dissipation ring, thereby protecting the ridge portion from reaching a temperature that could be harmful for the sealing ring disposed in the adjacent first recessed portion.

According to one embodiment, the heat-dissipation ring is circumferentially closed along the tangential direction. Alternatively, the heat-dissipation ring may comprise an axially and radially extending slot. The slot may be straight and could be aligned along the axial direction. However, it could be aligned at an angle to the axial direction. It could also have a non-straight shape, e.g., an undulated or meandering shape. Anyhow, the slot facilitates deformation of the heat-dissipation ring, which is useful for press-fitting it into the through-opening. Also, it can be used to fit the heat-dissipation ring onto the end portion, e.g., when it has to be disposed on a recessed portion and needs to expand to be moved over a neighbouring protruding portion.

Alternatively or additionally, the heat-dissipation ring, in undeformed state, can have a corrugated profile along the tangential direction. In other words, as viewed in the radial-tangential plane, the profile of the heat-dissipation ring is not a simple circular ring, which could be described by a single inner and outer diameter. Rather, the profile undulates along the tangential direction, i.e., it alternatingly protrudes and recedes. Normally, the corrugation is in the radial direction, but it could also be in the axial direction, alternatively or additionally. It will be understood that the corrugated structure allows the heat-dissipation ring to be deformed, thereby enabling expansion and compression, respectively.

According to one embodiment, the heat-dissipation ring is a laminar ring that forms a labyrinth seal with respect to the axial direction. Laminar rings are known in the art as sealing elements. The laminar ring is not closed in the tangential direction but comprises at least one element that are helically wound around the axial direction and overlaps itself. As a rule, each element is made of a metal band with an oblate cross section that is larger in the radial direction than in the axial direction. Several such elements can be disposed along the axial direction, either next to each other or axially spaced from each other. Each element can be regarded as a heat-dissipation ring, or the entire group of elements can be regarded as a single heat-dissipation ring. The open structure of each element facilitates radial deformation, which is beneficial during assembly of the heat-dissipation ring onto the end portion and/or during insertion of the end portion and the heat-dissipation ring into the through-opening.

One embodiment provides that the heat-dissipation ring is helically wound around the tangential direction. In other words, the general shape of the heat-dissipation ring is helical, with the axis of the helix not being straight, but annular and extending along the tangential direction. Such a helical shape allows for deformation in the axial direction as well as in the radial direction, thereby facilitating press-fitting the heat-dissipation ring into the through-opening.

For ease of assembly, the deflector cap and the end portion could be releasably connected, e.g., by positive locking or by friction locking. Such connection could allow for the deflector cap to be deformed independently of the end portion, e.g., when the fuel injector is press-fitted into the through-opening. Another preferred embodiment provides that the deflector cap is materially bonded to the end portion. In particular, it may be welded to the end portion. Both the end portion and the deflector cap are usually made of stainless steel, wherefore a connection by welding can be easily established. The material bond between the deflector cap and the end portion provides a secure connection without any risk of misalignment e.g., when the fuel injector is inserted into the through-opening. Although this kind of connection promotes heat transfer from the deflector cap to the end portion, this effect is alleviated or nullified by the presence of the heat-dissipation ring, which dissipates heat from the end portion towards the cylinder head.

In assembled state, the deflector cap could e.g., extend to a distal end of the through-opening so that it is flush with an inner surface of a combustion chamber. Even so, the deflector cap will be exposed to severely high temperatures. However, the deflector cap is commonly designed to extend distally beyond the through-opening into a combustion chamber. In this situation, the exposure to high temperatures is even more intense. However, such a configuration can allow for an improved fuel injection, since the at least one exit hole can be disposed inside the combustion chamber. It could e.g., be directed at an angle with respect to the axial direction, thereby enabling an "oblique" injection.

It is generally desirable that the deflector cap is in contact with the heat-dissipation ring. In reality though, the overpressure in the combustion chamber may push the heat-dissipation ring to the proximal side and thus away from the deflector cap. Accordingly, the heat-dissipation ring is usually spaced from the deflector cap so that it is only in indirect thermal contact with the deflector cap via the end portion.

In some embodiments, the deflector cap may be formed like a tube or sleeve that extends from the end portion towards the distal side. In such an embodiment, the outer diameter and the inner diameter of the deflector cap can be constant along the axial direction, or they show only minor variation. At its distal end, the deflector cap defines a single, relatively large exit hole, according to the inner diameter of the deflector cap. Such a configuration provides only limited protection for the end portion and the pintle since these can be significantly exposed to the temperatures of the combustion chamber. According to another embodiment, the deflector cap comprises an annular connection portion connected to the end portion and a hood portion spaced from the end portion and extending radially inwards from the connection portion. The hood portion can extend radially inwards to form a hood or dome that is closed except for the at least one exit hole, which is/are normally disposed in the hood portion. These exit holes may be configured to guide the exiting fuel (or fuel-air mixture) differently from what could be achieved by the outlet opening alone. The hood portion may be provided with a plurality of exit holes, the positions of which can be selected to achieve a predetermined spray pattern. The hood portion forms a shield that extends perpendicular to the axial direction and can thus prevent hot gases and infrared radiation from directly impinging on the distal end of the end portion and the pintle. A cavity or chamber can be formed between the hood portion and the end portion and/or the pintle. Such a chamber can promote mixing of air and fuel.

The invention further relates to an engine assembly. The engine assembly is either a part of an engine or it comprises the entire engine. Specifically, it is an engine assembly for an engine for gaseous fuel. In some embodiments, the engine assembly can also be referred to as an injector assembly or a cylinder-head assembly. It comprises a cylinder head with an axial through-opening and a fuel injector for direct injection of gaseous fuel. The fuel injector extends along an axial direction from a proximal side to a distal side and comprises:
- an injector body, defining a fuel passage and having a distally disposed end portion that is made of a first metal and defines a valve seat extending around an outlet opening, at least the end portion being adapted to be inserted into the through-opening;
- an outward opening pintle received in the injector body to be axially movable between a proximal closed position, in which it engages the valve seat to close the outlet opening, and a distal open position, in which it releases the outlet opening;
- a sealing ring surrounding the end portion in a first axial region and being sealingly engaging an inner surface of the through-opening;
- a deflector cap that is connected to the end portion and extends distally beyond the end portion and that defines at least one exit hole communicating with the outlet opening; and
- a heat-dissipation ring disposed in a second axial region distally offset to the first axial region and tangentially surrounding the end portion at least for the most part, the heat-dissipation ring being in thermal contact with the end portion and the inner surface, wherein the heat-dissipation ring is made of a second metal having a thermal conductivity that is at least 50% higher than a thermal conductivity of the first metal.

All these terms have been explained above with respect to the inventive fuel injector and will therefore not be explained again. Preferred embodiments of the inventive engine assembly correspond to those of the inventive fuel injector.

In general, the fuel injector may be part of a fuel delivery system that comprises a pressurized gas tank that contains pressurized gaseous fuel (e.g. hydrogen); and a fuel rail connected through a supply line to the gas tank, the fuel injector(s) being also connected to the fuel rail. The fuel delivery system may further comprise at least one of a pressure regulator, a shut off valve, a purge valve, a pressure relief valve; and the latter may be arranged in same or different housings.

### BRIEF DESCRIPTION OF THE DRAWINGS

Preferred embodiments of the invention will now be described, by way of example, with reference to the accompanying drawings, in which:
- Fig.1: is a sectional view of an engine assembly with a first embodiment of an inventive fuel injector in a closed position;
- Fig.2: is a sectional view of the engine assembly of fig.1 with the fuel injector in an open position;
- Fig.3: is a sectional view of an engine assembly with a second embodiment of an inventive fuel injector; and
- Figs.4-8: show embodiments of a heat-dissipation ring for an inventive fuel injector.

### DETAILED DESCRIPTION OF THE EMBODIMENTS

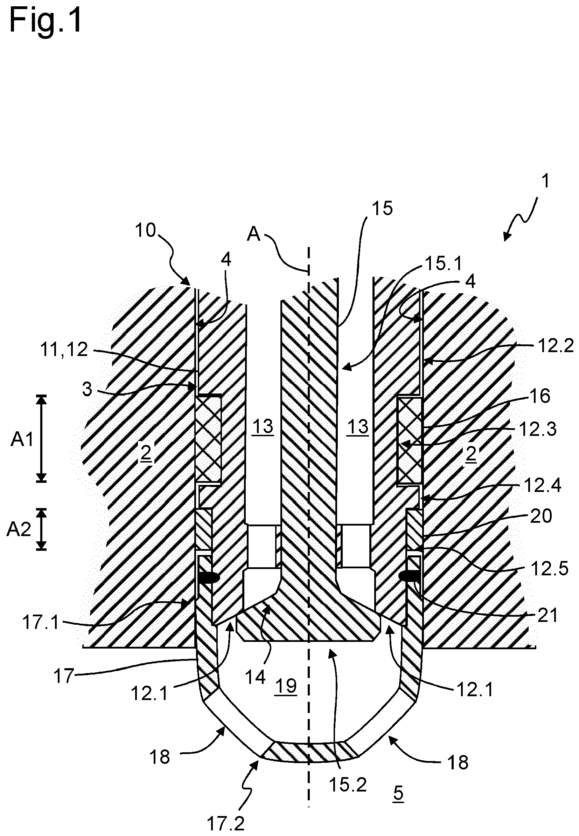

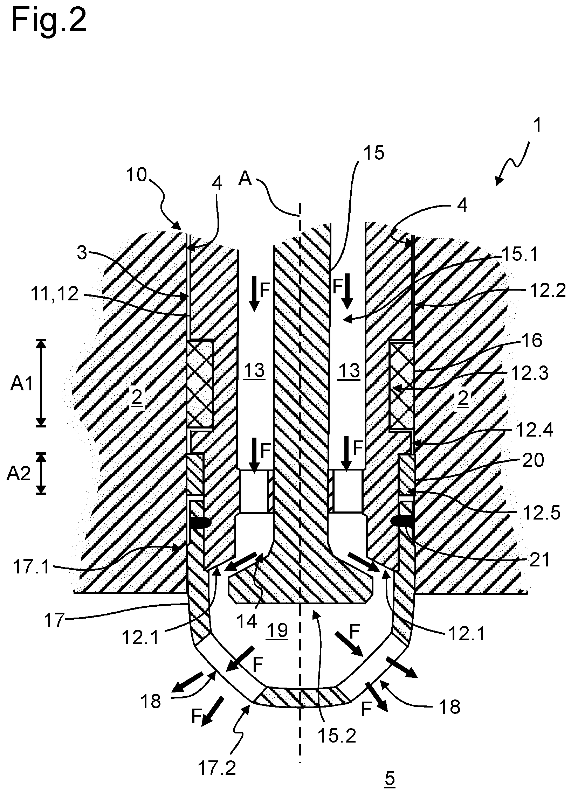

Figs. 1 and 2 show an engine assembly 1 according to the present invention. The engine assembly 1 comprises a cylinder head 2 that covers a combustion chamber 5 of a cylinder of an engine. The engine is adapted for a gaseous fuel F, in this case hydrogen. A through-opening 3 (or bore) traverses the wall of the cylinder head 2 in an axial direction A, which implicitly defines a radial direction and a tangential direction. The cylindrical through-opening 3 is delimited by an inner surface 4 of the cylinder head 3. The engine assembly 1 also comprises a fuel injector 10 of which only a distal part, which is closest to the combustion chamber 5, is shown. The fuel injector 10 comprises an injector body 11 that is made of stainless steel. At least an end portion 12 of the injector body 11 is inserted into the through-opening 3. The injector body 11 defines a fuel passage 13, which extends axially and communicates with an outlet opening 14. A pintle 15 is movably received inside the injector body 11. In a closed position, which is shown in fig. 1, a pintle head 15.2, which radially protrudes from a pintle shaft 15.1, closes the outlet opening 14. Specifically, the pintle head 15.2 rests against a valve seat 12.1 that is formed by the end portion 12 around the outlet opening 14. The pintle 15 is also made of stainless steel. The pintle 15 is biased into the closed position by a spring element (not shown). It is moved into the open position by an electromagnetic actuator, e.g. of the solenoid type (also not shown).
Although not shown in the drawings, the injector body 11 includes an upper portion with an inlet for gaseous fuel, from which the gas F can flow internally through the body towards the opposite end portion 12 and valve seat 12.1. In general, the injector gaseous fuel inlet is connected to a fuel rail, in turn connected through a supply line to a fuel tank containing pressurized fuel gas, such as e.g. hydrogen.

The outer dimension of the end portion 12 is not constant along the axial direction A. Rather, it comprises a first protruding portion 12.2, a first recessed portion 12.3, a second protruding portion or ridge portion 12.4, and a second recessed portion 12.5 that extends up to the distal and of the end portion 12. The first recessed portion 12.3 forms a groove between the adjacent protruding portions 12.2, 12.4, in which a sealing ring 16 is received. The sealing ring 16 is made of a PTFE polymer filled with carbon and extends over a first axial region A1 with respect to the axial direction A. It sealingly engages the end portion 12 and the inner surface 4, thereby providing a gas-tight seal between the combustion chamber 5 and the outside of the cylinder head 2.

A deflector cap 17 is received around the second recessed portion 12.5 and is connected to the end portion 12 by a weld 21. Specifically, a connection portion 17.1 of the deflector cap 17 is welded to the end portion 12. While the connection portion 17.1 is roughly cylindrical and extends roughly parallel to the axial direction A, a hood portion 17.2 extends radially inwards from the connection portion 17.1 and forms a roughly dome-like shape. A plurality of exit holes 18 are disposed in the hood portion 17.2 and communicate with the outlet opening 14 via a cavity 19 that is formed within the deflector cap 17.

The deflector cap 17 with its exit holes 18 helps to shape and direct a flow of the gaseous fuel F when the pintle 15 is moved to an open position shown in fig. 2. Also, the cavity 19 may be beneficial for mixing the gaseous fuel F with air and it may protect the end portion 12 and the pintle 15 from excessive heat exposure. However, since the deflector cap 17 with its hood portion 17.2 extends distally beyond the through-opening 3 into the combustion chamber 5, it is subjected to elevated temperatures, which are especially high due to the combustion of hydrogen. Since the deflector cap 17 is in thermal contact with the inner surface 4, some of the heat may be dissipated into the cylinder head 2 before it flows into the end portion 12. However, a considerable heat flow from the deflector cap 17 into the end portion 12 cannot be prevented. This would pose a potential damage risk for the sealing ring 16, which is only adapted to withstand temperatures of e.g., 260°C before it starts to deteriorate.

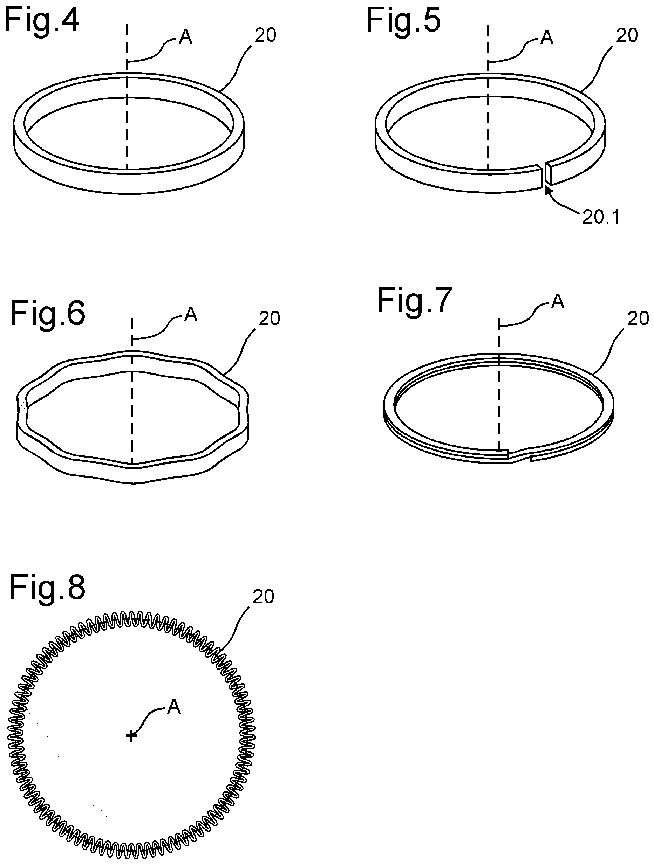

In order to mitigate this problem, the fuel injector 10 also comprises a heat-dissipation ring 20 that is disposed on the second recessed portion 12.5, proximal to the deflector cap 17. Specifically, the heat-dissipation ring 20 is disposed in a second axial region A2 that is distally spaced from the first axial region A1. When the fuel injector 10 is assembled to the cylinder head 2, the heat-dissipation ring 20 is press-fitted into the through-opening 3 so that it is in thermal contact with the end portion 12 as well as with the inner surface 4 of the cylinder head 2. It will be appreciated that during assembly of the fuel injector 10, the heat-dissipation ring 20 can be passed over the second recessed portion 12.5 before the deflector cap 17 is put onto the second recessed portion 12.5 and welded thereto. The shape of the heat-dissipation ring 20 can be as represented in fig. 4, i.e., a closed, annular shape. While the end portion 12 is made of stainless steel as mentioned above, the heat-dissipation ring 20 is made of copper or a copper alloy. Accordingly, its thermal conductivity is at least four times higher than that of the end portion 12. Accordingly, a considerable portion of the heat flow is diverted through the heat-dissipation ring 20 into the cylinder head 2 before it reaches the sealing ring 16. The hardness of the heat-dissipation ring 20 is significantly lower than that of the cylinder head 2, wherefore the latter is not damaged when the heat-dissipation ring 20 is press-fitted into the through-opening 3.

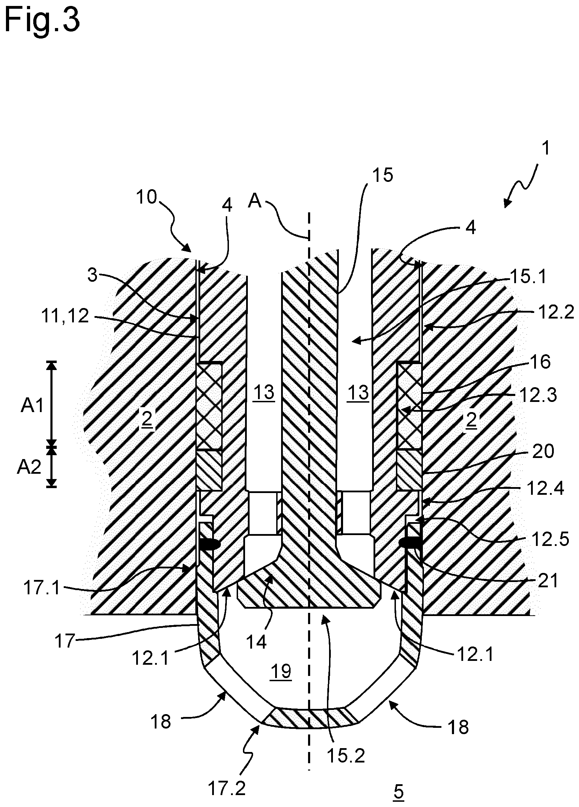

Fig. 3 shows a second embodiment of an inventive engine assembly 1, which is largely identical to the first embodiment and insofar will not be discussed again. In this case, however, the first recessed portion 12.3 extends further to the distal side and receives the sealing ring 16 as well as the heat-dissipation ring 20. Both rings 16, 20 are disposed next to each other. Accordingly, the second axial region A2 is distally adjacent to the first axial region A1. While in the first embodiment, the heat-dissipation ring 20 can be pushed over the end portion 12 along the axial direction, this is not possible in the second embodiment due to the presence of the second protruding portion or ridge portion 12.4. Accordingly, the heat-dissipation ring 20 needs to be expanded radially so that it can be moved over the ridge portion 12.4. For this purpose, the heat-dissipation ring 20 may comprise a groove 20.1 as shown in fig. 5.

While the rings 20 shown in fig. 4 and fig. 5 have a circular cross-section perpendicular to the axial direction A, fig. 6 shows an embodiment where the heat-dissipation ring 20 has a corrugated profile along the tangential direction. This shape also allows the heat-dissipation ring 20 to expanded radially. Fig. 7 shows embodiment in which the heat-dissipation ring 20 is a laminar ring that acts as a labyrinth seal with respect to the axial direction A. Fig. 8 is an embodiment where the heat-dissipation ring 20 has a helical structure that is wound around the tangential direction (which is indicated by the dashed line).

### Legend of Reference Numbers:

- 1: engine assembly
- 2: cylinder head
- 3: through-opening
- 4: inner surface
- 5: combustion chamber
- 10: fuel injector
- 11: injector body
- 12: end portion
- 12.1: valve seat
- 12.2, 12.4: protruding portion
- 12.3, 12.5: recessed portion
- 13: fuel passage
- 14: outlet opening
- 15: pintle
- 15.1: pintle shaft
- 15.2: pintle head
- 16: sealing ring
- 17: deflection cap
- 17.1: connection portion
- 17.2: hood portion
- 18: exit hole
- 19: cavity
- 20: heat-dissipation ring
- 20.1: slot
- 21: weld
- A: axial direction
- A1, A2: axial region
- F: fuel

## Claims

1. A fuel injector (10) for direct injection of gaseous fuel (F), extending along an axial direction (A) from a proximal side to a distal side and comprising:
- an injector body (11) defining a fuel passage (13) and having a distally disposed end portion (12) that is made of a first metal and defines a valve seat (12.1) extending around an outlet opening (14), at least the end portion (12) being adapted to be inserted into an axial through-opening (3) of a cylinder head (2);
- an outward opening pintle (15) received in the injector body (11) to be axially movable between a proximal closed position, in which it engages the valve seat (12.1) to close the outlet opening (14), and a distal open position, in which it releases the outlet opening (14);
- a sealing ring (16) surrounding the end portion (12) in a first axial region (A1) and being adapted to sealingly engage an inner surface (4) of the through-opening (3);
- a deflector cap (17) that is connected to the end portion (12) and extends distally beyond the end portion (12) and that defines at least one exit hole (18) communicating with the outlet opening (14),
- a heat-dissipation ring (20) disposed in a second axial region (A2) distally offset to the first axial region (A1) and tangentially surrounding the end portion (12) at least for the most part, the heat-dissipation ring (20) being adapted for being in thermal contact with the end portion (12) and the inner surface (4) when the end portion (12) is inserted into the through-opening (3),
wherein the heat-dissipation ring (20) is made of a second metal having a thermal conductivity that is at least 50% higher than a thermal conductivity of the first metal.

2. The fuel injector according to claim 1, wherein the second metal comprises copper.

3. The fuel injector according to any of the preceding claims, wherein the heat-dissipation ring (20) is designed to be press-fitted into the through-opening (3) under deformation so that it presses against the inner surface (4).

4. The fuel injector according to any of the preceding claims, wherein the sealing ring (16) and the heat-dissipation ring (20) are disposed on at least one recessed portion (12.3, 12.5) of the end portion (12), with the heat-dissipation ring (20) being at least partially disposed distal to the sealing ring (16).

5. The fuel injector according to any of the preceding claims, wherein the sealing ring (16) and the heat-dissipation ring (20) are disposed on the same recessed portion (12.3, 12.5).

6. The fuel injector according to any of the preceding claims, wherein the sealing ring (16) is disposed on a first recessed portion (12.3) and the heat-dissipation ring (20) is disposed on a second recessed portion (12.5) axially spaced from the first recessed portion (12.3) by a ridge portion (12.4) which radially protrudes with respect to the recessed portions (12.3, 12.5).

7. The fuel injector according to any of the preceding claims, wherein the heat-dissipation ring (20) comprises an axially and radially extending slot (20.1).

8. The fuel injector according to any of the preceding claims, wherein the heat-dissipation ring (20), in undeformed state, has a corrugated profile along the tangential direction.

9. The fuel injector according to any of the preceding claims, wherein the heat-dissipation ring (20) is a laminar ring that forms a labyrinth seal with respect to the axial direction (A).

10. The fuel injector according to any of the preceding claims, wherein the heat-dissipation ring (20) is helically wound around the tangential direction.

11. The fuel injector according to any of the preceding claims, wherein the deflector cap (17) is materially bonded to the end portion (12).

12. The fuel injector according to any of the preceding claims, wherein the deflector cap (17) is designed to extend distally beyond the through-opening (3) into a combustion chamber (5).

13. The fuel injector according to any of the preceding claims, wherein the deflector cap (17) comprises an annular connection portion (17.1) connected to the end portion (12) and a hood portion (17.2) spaced from the end portion (12) and extending radially inwards from the connection portion (17.1).

14. An engine assembly (1) with a cylinder head (2) comprising an axial through-opening (3) and a fuel injector (10) for direct injection of gaseous fuel (F), the fuel injector (10) extending along an axial direction (A) from a proximal side to a distal side and comprising:
- an injector body (11) defining a fuel passage (13) and having a distally disposed end portion (12) that is made of a first metal and defines a valve seat (12.1) extending around an outlet opening (14), at least the end portion (12) being adapted to be inserted into the through-opening (3);
- an outward opening pintle (15) received in the injector body (11) to be axially movable between a proximal closed position, in which it engages the valve seat (12.1) to close the outlet opening (14), and a distal open position, in which it releases the outlet opening (14);
- a sealing ring (16) surrounding the end portion (12) in a first axial region (A1) and sealingly engaging an inner surface (4) of the through-opening (3);
- a deflector cap (17) that is connected to the end portion (12) and extends distally beyond the end portion (12) and that defines at least one exit hole (18) communicating with the outlet opening (14),
- a heat-dissipation ring (20) disposed in a second axial region (A2) distally offset to the first axial region (A1) and tangentially surrounding the end portion (12) at least for the most part, the heat-dissipation ring (20) being in thermal contact with the end portion (12) and the inner surface (4),
wherein the heat-dissipation ring (20) is made of a second metal having a thermal conductivity that is at least 50% higher than a thermal conductivity of the first metal.

## Patentansprüche

1. Kraftstoffinjektor (10) zur Direkteinspritzung von gasförmigem Kraftstoff (F), der sich entlang einer axialen Richtung (A) von einer proximalen Seite zu einer distalen Seite erstreckt und Folgendes umfasst:
- einen Injektorkörper (11), der einen Kraftstoffkanal (13) definiert und einen distal angeordneten Endabschnitt (12) aufweist, der aus einem ersten Metall besteht und einen Ventilsitz (12.1) definiert, der sich um eine Auslassöffnung (14) herum erstreckt, wobei zumindest der Endabschnitt (12) so ausgebildet ist, dass er in eine axiale Durchgangsöffnung (3) eines Zylinderkopfs (2) eingeführt werden kann;
- einen nach außen mündenden Zapfen (15), der in dem Injektorkörper (11) aufgenommen ist, um axial zwischen einer proximalen Schließstellung, in der er am Ventilsitz (12.1) angreift, um die Auslassöffnung (14) zu verschließen, und einer distalen Öffnungsstellung, in der er die Auslassöffnung (14) freigibt, bewegbar zu sein;
- einen Dichtungsring (16), der den Endabschnitt (12) in einem ersten axialen Bereich (A1) umgibt und dazu ausgelegt ist, dichtend an einer Innenfläche (4) der Durchgangsöffnung (3) anzuliegen;
- eine Ablenkkappe (17), die mit dem Endabschnitt (12) verbunden ist und sich distal über den Endabschnitt (12) hinaus erstreckt und mindestens ein mit der Auslassöffnung (14) in Verbindung stehendes Austrittsloch (18) definiert,
- einen Wärmeableitring (20), der in einem zweiten axialen Bereich (A2) angeordnet ist, der gegenüber dem ersten axialen Bereich (A1) distal versetzt ist, und den Endabschnitt (12) zumindest größtenteils tangential umgibt, wobei der Wärmeableitring (20) so ausgebildet ist, dass er in thermischem Kontakt mit dem Endabschnitt (12) und der Innenfläche (4) steht, wenn der Endabschnitt (12) in die Durchgangsöffnung (3) eingeführt ist,
wobei der Wärmeableitring (20) aus einem zweiten Metall besteht, dessen Wärmeleitfähigkeit mindestens 50 % höher als die Wärmeleitfähigkeit des ersten Metalls ist.

2. Kraftstoffinjektor nach Anspruch 1, wobei das zweite Metall Kupfer aufweist.

3. Kraftstoffinjektor nach einem der vorhergehenden Ansprüche, wobei der Wärmeableitring (20) so ausgebildet ist, dass er unter Verformung in die Durchgangsöffnung (3) eingepresst wird, so dass er gegen die Innenfläche (4) drückt.

4. Kraftstoffinjektor nach einem der vorhergehenden Ansprüche, wobei der Dichtungsring (16) und der Wärmeableitring (20) an mindestens einem vertieften Abschnitt (12.3, 12.5) des Endabschnitts (12) angeordnet sind, wobei der Wärmeableitring (20) zumindest teilweise distal zum Dichtungsring (16) angeordnet ist.

5. Kraftstoffinjektor nach einem der vorhergehenden Ansprüche, wobei der Dichtungsring (16) und der Wärmeableitring (20) an demselben vertieften Abschnitt (12.3, 12.5) angeordnet sind.

6. Kraftstoffinjektor nach einem der vorhergehenden Ansprüche, wobei der Dichtungsring (16) an einem ersten vertieften Abschnitt (12.3) und der Wärmeableitring (20) an einem zweiten vertieften Abschnitt (12.5) angeordnet ist, der durch einen Stegabschnitt (12.4), der in Bezug auf die vertieften Abschnitte (12.3, 12.5) radial vorsteht, von dem ersten vertieften Abschnitt (12.3) axial beabstandet ist.

7. Kraftstoffinjektor nach einem der vorhergehenden Ansprüche, wobei der Wärmeableitring (20) einen sich axial und radial erstreckenden Schlitz (20.1) aufweist.

8. Kraftstoffinjektor nach einem der vorhergehenden Ansprüche, wobei der Wärmeableitring (20) im unverformten Zustand ein gewelltes Profil entlang der Tangentialrichtung aufweist.

9. Kraftstoffinjektor nach einem der vorhergehenden Ansprüche, wobei der Wärmeableitring (20) ein laminarer Ring ist, der in Bezug auf die axiale Richtung (A) eine Labyrinthdichtung bildet.

10. Kraftstoffinjektor nach einem der vorhergehenden Ansprüche, wobei der Wärmeableitring (20) spiralförmig um die Tangentialrichtung gewickelt ist.

11. Kraftstoffinjektor nach einem der vorhergehenden Ansprüche, wobei die Ablenkkappe (17) stoffschlüssig mit dem Endabschnitt (12) verbunden ist.

12. Kraftstoffinjektor nach einem der vorhergehenden Ansprüche, wobei die Ablenkkappe (17) so ausgebildet ist, dass sie sich distal über die Durchgangsöffnung (3) hinaus in eine Brennkammer (5) erstreckt.

13. Kraftstoffinjektor nach einem der vorhergehenden Ansprüche, wobei die Ablenkkappe (17) einen ringförmigen Verbindungsabschnitt (17.1), der mit dem Endabschnitt (12) verbunden ist, und einen Haubenabschnitt (17.2) umfasst, der vom Endabschnitt (12) beabstandet ist und sich vom Verbindungsabschnitt (17.1) radial nach innen erstreckt.

14. Motorbaugruppe (1) mit einem Zylinderkopf (2), der eine axiale Durchgangsöffnung (3) und einen Kraftstoffinjektor (10) zur Direkteinspritzung von gasförmigem Kraftstoff (F) aufweist, wobei sich der Kraftstoffinjektor (10) entlang einer axialen Richtung (A) von einer proximalen Seite zu einer distalen Seite erstreckt und Folgendes umfasst:
- einen Injektorkörper (11), der einen Kraftstoffkanal (13) definiert und einen distal angeordneten Endabschnitt (12) aufweist, der aus einem ersten Metall besteht und einen Ventilsitz (12.1) definiert, der sich um eine Auslassöffnung (14) herum erstreckt, wobei zumindest der Endabschnitt (12) so ausgebildet ist, dass er in die Durchgangsöffnung (3) eingeführt werden kann;
- einen nach außen mündenden Zapfen (15), der in dem Injektorkörper (11) aufgenommen ist, um axial zwischen einer proximalen Schließstellung, in der er am Ventilsitz (12.1) angreift, um die Auslassöffnung (14) zu verschließen, und einer distalen Öffnungsstellung, in der er die Auslassöffnung (14) freigibt, bewegbar zu sein;
- einen Dichtungsring (16), der den Endabschnitt (12) in einem ersten axialen Bereich (A1) umgibt und dichtend an einer Innenfläche (4) der Durchgangsöffnung (3) anliegt;
- eine Ablenkkappe (17), die mit dem Endabschnitt (12) verbunden ist und sich distal über den Endabschnitt (12) hinaus erstreckt und mindestens ein mit der Auslassöffnung (14) in Verbindung stehendes Austrittsloch (18) definiert,
- einen Wärmeableitring (20), der in einem zweiten axialen Bereich (A2) angeordnet ist, der gegenüber dem ersten axialen Bereich (A1) distal versetzt ist, und den Endabschnitt (12) zumindest größtenteils tangential umgibt, wobei der Wärmeableitring (20) in thermischem Kontakt mit dem Endabschnitt (12) und der Innenfläche (4) steht,
wobei der Wärmeableitring (20) aus einem zweiten Metall besteht, dessen Wärmeleitfähigkeit mindestens 50 % höher ist als die Wärmeleitfähigkeit des ersten Metalls.

## Revendications

1. Injecteur de carburant (10) pour injection directe de carburant gazeux (F), s'étendant le long d'une direction axiale (A) d'un côté proximal à un côté distal et comprenant :
- un corps d'injecteur (11) définissant un passage de carburant (13) et ayant une partie d'extrémité (12) disposée distalement qui est réalisée en un premier métal et définit un siège de soupape (12.1) s'étendant autour d'une ouverture de sortie (14), au moins la partie d'extrémité (12) étant adaptée pour être insérée dans une ouverture traversante axiale (3) d'une culasse (2) ;
- une aiguille d'ouverture vers l'extérieur (15) reçue dans le corps d'injecteur (11) de manière à pouvoir se déplacer axialement entre une position proximale fermée, dans laquelle elle s'engage avec le siège de soupape (12.1) pour fermer l'ouverture de sortie (14), et une position distale ouverte, dans laquelle elle libère l'ouverture de sortie (14) ;
- une bague d'étanchéité (16) entourant la partie d'extrémité (12) dans une première région axiale (A1) et étant adaptée pour s'engager de manière étanche avec une surface interne (4) de l'ouverture traversante (3) ;
- un capuchon déflecteur (17) qui est relié à la partie d'extrémité (12) et s'étend distalement au-delà de la partie d'extrémité (12) et qui définit au moins un trou de sortie (18) communiquant avec l'ouverture de sortie (14),
- une bague de dissipation thermique (20) disposée dans une seconde région axiale (A2) décalée distalement par rapport à la première région axiale (A1) et entourant tangentiellement la partie d'extrémité (12) au moins en grande partie, la bague de dissipation thermique (20) étant adaptée pour être en contact thermique avec la partie d'extrémité (12) et la surface interne (4) lorsque la partie d'extrémité (12) est insérée dans l'ouverture traversante (3),
dans lequel la bague de dissipation thermique (20) est réalisée en un second métal ayant une conductivité thermique qui est supérieure d'au moins 50% à la conductivité thermique du premier métal.

2. Injecteur de carburant selon la revendication 1, dans lequel le second métal comprend du cuivre.

3. Injecteur de carburant selon l'une des revendications précédentes, dans lequel la bague de dissipation thermique (20) est conçue pour être ajustée par pression dans l'ouverture traversante (3) sous déformation, de sorte qu'elle appuie contre la surface interne (4).

4. Injecteur de carburant selon l'une des revendications précédentes, dans lequel la bague d'étanchéité (16) et la bague de dissipation thermique (20) sont disposées sur au moins une partie en retrait (12.3, 12.5) de la partie d'extrémité (12), la bague de dissipation thermique (20) étant disposée au moins partiellement distalement par rapport à la bague d'étanchéité (16).

5. Injecteur de carburant selon l'une des revendications précédentes, dans lequel la bague d'étanchéité (16) et la bague de dissipation thermique (20) sont disposées sur la même partie en retrait (12.3, 12.5).

6. Injecteur de carburant selon l'une des revendications précédentes, dans lequel la bague d'étanchéité (16) est disposée sur une première partie en retrait (12.3) et la bague de dissipation thermique (20) est disposée sur une seconde partie en retrait (12.5) espacée axialement de la première partie en retrait (12.3) par une partie d'arête (12.4) qui fait saillie radialement par rapport aux parties en retrait (12.3, 12.5).

7. Injecteur de carburant selon l'une des revendications précédentes, dans lequel la bague de dissipation thermique (20) comprend une fente (20.1) s'étendant axialement et radialement.

8. Injecteur de carburant selon l'une des revendications précédentes, dans lequel la bague de dissipation thermique (20), à l'état non déformé, présente un profil ondulé le long de la direction tangentielle.

9. Injecteur de carburant selon l'une des revendications précédentes, dans lequel la bague de dissipation thermique (20) est une bague laminaire qui forme un joint à labyrinthe par rapport à la direction axiale (A).

10. Injecteur de carburant selon l'une des revendications précédentes, dans lequel la bague de dissipation thermique (20) est enroulée en hélice autour de la direction tangentielle.

11. Injecteur de carburant selon l'une des revendications précédentes, dans lequel le capuchon déflecteur (17) est relié par liaison de matière à la partie d'extrémité (12).

12. Injecteur de carburant selon l'une des revendications précédentes, dans lequel le capuchon déflecteur (17) est conçu pour s'étendre distalement au-delà de l'ouverture traversante (3) dans une chambre de combustion (5).

13. Injecteur de carburant selon l'une des revendications précédentes, dans lequel le capuchon déflecteur (17) comprend une partie de raccordement annulaire (17.1) reliée à la partie d'extrémité (12) et une partie de capot (17.2) espacée de la partie d'extrémité (12) et s'étendant radialement vers l'intérieur à partir de la partie de raccordement (17.1).

14. Ensemble moteur (1) avec une culasse (2) comprenant une ouverture traversante axiale (3) et un injecteur de carburant (10) pour injection directe de carburant gazeux (F), l'injecteur de carburant (10) s'étendant le long d'une direction axiale (A) d'un côté proximal à un côté distal et comprenant :
- un corps d'injecteur (11) définissant un passage de carburant (13) et ayant une partie d'extrémité (12) disposée distalement qui est réalisée en un premier métal et définit un siège de soupape (12.1) s'étendant autour d'une ouverture de sortie (14), au moins la partie d'extrémité (12) étant adaptée pour être insérée dans l'ouverture traversante (3) ;
- une aiguille d'ouverture vers l'extérieur (15) reçue dans le corps d'injecteur (11) de manière à pouvoir se déplacer axialement entre une position proximale fermée, dans laquelle elle s'engage avec le siège de soupape (12.1) pour fermer l'ouverture de sortie (14), et une position distale ouverte, dans laquelle elle libère l'ouverture de sortie (14) ;
- une bague d'étanchéité (16) entourant la partie d'extrémité (12) dans une première région axiale (A1) et s'engageant de manière étanche avec une surface interne (4) de l'ouverture traversante (3) ;
- un capuchon déflecteur (17) qui est relié à la partie d'extrémité (12) et s'étend distalement au-delà de la partie d'extrémité (12) et qui définit au moins un trou de sortie (18) communiquant avec l'ouverture de sortie (14),
- une bague de dissipation thermique (20) disposée dans une seconde région axiale (A2) décalée distalement par rapport à la première région axiale (A1) et entourant tangentiellement la partie d'extrémité (12) au moins en grande partie, la bague de dissipation thermique (20) étant en contact thermique avec la partie d'extrémité (12) et la surface interne (4),
dans lequel la bague de dissipation thermique (20) est réalisée en un second métal ayant une conductivité thermique qui est supérieure d'au moins 50% à la conductivité thermique du premier métal.
